# FASCICULE DE BREVET EUROPEEN

(11) **EP 1 256 880 B1**
(45) Date de publication et mention de la délivrance du brevet: **09.02.2011**
(21) Numéro de dépôt: 02076766.1
(22) Date de dépôt: 03.05.2002
(51) Int. Cl.: G06F 13/16

(54) **Système de traitement de données et procédé de distribution d'accès à des mémoires**
Datenverarbeitungssystem und Verfahren zur Zuteilung von Speicherzugriff
Data processing system and method for distributing memory access

(30) Priorité: 10.05.2001 FR 0106198
(43) Date de publication de la demande: 13.11.2002
(73) Titulaire: NXP B.V., 5656 AG Eindhoven (NL)
(72) Inventeur: Rosay, Arnaud, 75008 Paris (FR); Ortion, Jean-Michel, 75008 Paris (FR)
(74) Mandataire: Zapalowicz, Francis

(56) Documents cités:
- US-A- 5 481 677
- US-A- 5 920 898

## Description

### Domaine technique

La présente invention concerne un système de traitement de données incluant un processeur, et un procédé de distribution de mémoires pour le processeur. L'invention trouve des applications dans une gamme assez vaste de produits équipés d'un processeur intégré. Parmi ces produits sont particulièrement visés les équipements portables, tels que les micro-ordinateurs, les dispositifs de présentation de données ou d'images, et les téléphones cellulaires. De façon plus générale, l'invention présente des avantages pour tous les équipements de traitement de données alimentés à partir d'une source d'énergie autonome, telle qu'une pile ou un accumulateur électrique.

### Etat de la technique antérieure.

Les systèmes de traitement de données intégrant un processeur, une mémoire de données et une mémoire de programme, présentent pour la plupart une architecture se conformant à l'un parmi deux modèles d'architecture principaux.

Le premier modèle d'architecture est dit de « Harvard ». Les systèmes de traitement répondant à cette architecture présentent généralement un premier bus pour l'échange de données entre le processeur et une mémoire de programme, et un deuxième bus, distinct du premier, pour l'échange de données entre le processeur et une mémoire de données.

Le second modèle d'architecture, auquel répond le système de traitement de données de l'invention, est dit de « Von Neumann ». US5481677 décrit un tel système. Conformément à cette architecture, un bus commun est partagé par la mémoire de données et la mémoire de programme pour l'échange d'informations avec le processeur. Ceci signifie que des instructions de programme (code) de la mémoire de programme et des données de traitement de la mémoire de données ne peuvent être véhiculées de façon concomitante par le bus commun.

Quelle que soit l'architecture retenue pour le système de traitement de données, les performances du système, en termes de vitesse de traitement, peuvent généralement être améliorées en augmentant la fréquence de fonctionnement du processeur.

La vitesse de traitement des données n'est cependant pas limitée seulement par la fréquence de fonctionnement du processeur mais aussi par le temps nécessaire pour lire les instructions et les données nécessaires au traitement dans les mémoires de programme ou de données. Le temps nécessaire pour la lecture ou l'écriture d'une donnée ou d'une instruction dans une mémoire peut être réduit en augmentant la tension électrique de commande des mémoires.

L'augmentation de la fréquence de fonctionnement du processeur et de la tension des mémoires a pour conséquence une consommation en énergie électrique accrue et une plus forte dissipation thermique. Ces effets, éventuellement acceptables pour des installations fixes, sont particulièrement néfastes pour les applications embarquées et notamment pour les équipements portables alimentés par pile ou par accumulateur.

Pour réduire les lenteurs de traitement liées au temps de lecture (ou d'écriture) des mémoires, encore désigné par temps d'accès, des types particuliers de mémoires ont été conçus. Ces mémoires sont désignées dans la suite du texte par mémoires à accès rapide. Il s'agit, par exemple, de mémoires de type « rafale » (burst), et de mémoires de type « page ». Pour ces mémoires, lorsqu'une série de données ou d'instructions doit être lue, la lecture de la première donnée ou instruction de la série a lieu selon un mode d'accès lent, appelé « accès initial », et les données ou instructions suivantes sont lues en accès rapide avec un temps de lecture réduit.

A titre d'illustration, pour une mémoire de type rafale (burst), l'accès initial, qui est non séquentiel, nécessite un temps d'accès de l'ordre de 65 nsec, tandis que les accès rapides subséquents, qui sont séquentiels ne nécessitent qu'un temps d'accès individuel de 18 nsec.

Dans une architecture de « Von Neumann » telle qu'évoquée précédemment, le processeur lit (ou éventuellement enregistre) des données ou instructions sélectivement et alternativement dans l'une parmi les mémoires de données ou de programme, puis dans l'autre de ces mémoires. Dans la suite du texte, l'état de la mémoire en communication avec le processeur est qualifié d'«actif». Son état est qualifié d'«inactif» lorsque la mémoire n'est pas en communication avec le processeur. Chaque passage d'une mémoire de l'état qualifié d'inactif à l'état qualifié d'actif, se traduit par un premier accès lent : c'est l'accès initial. Comme indiqué ci-dessus, les données subséquentes lues dans la même mémoire avant qu'elle ne retourne à l'état inactif sont obtenues en accès rapide. On désigne par données subséquentes des données qui sont mémorisées à la suite d'une première donnée dans une mémoire rafale ou qui sont mémorisées dans une même page d'une mémoire page.

On donne ci-après une illustration du fonctionnement d'un processeur particulier dans une architecture de « Von Neumann ». Il s'agit d'un processeur à jeu d'instructions réduit (RISC) du type ARM7. Ce type de processeur est capable d'effectuer un certain nombre de tâches parmi lesquelles on distingue notamment :
- le mouvement de données (data movment),
- la commande de cheminement dans l'exécution d'un programme (control flow)
- des opérations arithmétiques (addition, soustraction)
- des opérations logiques (ET, OU, Non ET, Non OU).

Les tâches sont exécutées principalement en trois étapes correspondant à trois niveaux d'exécution du processeur (pipe-line). Ces trois étapes sont la lecture d'une instruction, son décodage, et son exécution proprement dite. Les étapes peuvent être assorties de lectures ou d'écritures de données.

Le tableau I ci-dessous résume ces étapes dans une série de tâches à exécuter, données purement à titre d'exemple. Dans ce tableau, on indique une succession de tâches, et les étapes de l'exécution de celles-ci. Les étapes sont désignées par "F" (fetch) pour la lecture d'une instruction dans la mémoire de programme, par "D" pour le décodage de l'instruction, par "E" pour son exécution, "A" désigne la lecture de données dans la mémoire de données. Les cases du tableau marquées d'un "X" correspondent à une attente liée à la lecture d'une donnée dans la mémoire de données.

**TABLEAU I**

| | Tâches | Etapes | | | | | | | | | | | |
|---|---|---|---|---|---|---|---|---|---|---|---|---|---|
| 1 | Mouvement de Données | F | D | E | AZ | | | | | | | | |
| 2 | Opération Logique | | F | D | X | E | | | | | | | |
| 3 | Mouvement de Données | | | F | X | D | E | A | | | | | |
| 4 | Opération Arithmétique | | | | | F | D | X | E | | | | |
| 5 | Commande de Cheminement | | | | | | F | X | D | E | | | |
| 6 | Mouvement de Données | | | | | | | | F | D | X | X | |
| 7 | Opération Arithmétique | | | | | | | | | F | X | X | |
| 8 | Mouvement de Données | | | | | | | | | | | D | E |
| 9 | Opération arithmétique | | | | | | | | | | | F | D |
| 10 | Mouvement de données de données | | | | | | | | | | | | F |
| | | NS | S | S | NS | NS | S | NS | NS | S | NS | NS | S |

Le tableau I, dont la lecture chronologique va de gauche à droite, indique en outre, dans sa dernière ligne, le caractère séquentiel (S) ou non séquentiel (NS) des étapes, dans le cas où les mémoires sont du type rafale (burst).

Comme indiqué ci-dessus, les cases "F" du tableau I correspondent à une lecture dans la mémoire de programme tandis que les cases "A" correspondent à une lecture dans la mémoire de données. Ainsi, lors de chaque lecture "A" dans la mémoire de données, la mémoire de programme passe dans l'état dit inactif de sorte que l'étape "F" suivante est effectuée après un accès initial non séquentiel de plus longue durée (65 nsec). La prochaine lecture "A" dans la mémoire de données est également effectuée après un accès initial non séquentiel dans la mesure où une lecture "F" dans la mémoire de programme est intervenue entre-temps. Ceci apparaît en particulier sur les lignes 1 à 5 du tableau I. Finalement chaque lecture d'une donnée dans la mémoire de données se solde par deux accès initiaux non séquentiels et par la perte d'un cycle de traitement. Dans le tableau I chaque cycle de traitement correspond à une étape, c'est-à-dire une case dans le sens des lignes.

Lors de l'exécution d'une commande de cheminement, qui correspond à la dernière case de la ligne 5 du tableau, la lecture des données suivantes dans la mémoire de programme se fait à une adresse qui n'est pas à la suite des adresses des instructions précédemment lues dans cette même mémoire. Ceci implique donc également un accès non séquentiel de type initial à la mémoire de programme. De plus, le décodage et l'exécution des instructions de programme encore lues à la suite des adresses des instructions précédentes, avant l'exécution de la commande de cheminement, doivent être inhibés ou tout au moins sont inutiles, dans la mesure ou elles ne prennent pas en compte la commande de cheminement. Ces étapes sont également marquées d'un "X" dans les lignes 6 et 7 du tableau.

On peut enfin noter que, pour les mémoires de type rafale, il existe une longueur maximum de mots susceptibles d'être lus successivement avec un accès rapide (18 nsec). Au terme de ce nombre, qui est par exemple de 32, un nouvel accès initial plus lent (65 nsec) doit être effectué.

On peut calculer le temps moyen nécessaire pour l'exécution d'un programme impliquant 100 étapes "F" c'est-à-dire la lecture de 100 instructions. Ce calcul se base sur le fonctionnement indiqué par le tableau I et sur les données du tableau II. Le tableau II indique la proportion statistique des différentes tâches mentionnées ci-dessus dans l'exécution d'un programme.

**TABLEAU II**

| | |
|---|---|
| Mouvement de données | 43% |
| Commande de cheminement | 23% |
| Opération arithmétique | 15% |
| Comparaison | 13% |
| Opérations logiques | 5% |
| Autres | 1% |

En considérant les données ci-dessus, la lecture de 100 instructions de programme requiert 143 cycles, c'est-à-dire 143 étapes d'exécution. Parmi celles-ci, on compte 43 accès non séquentiels (initiaux) pour le mouvement de données de la mémoire de données, 43 cycles non-séquentiels (initiaux) subséquents pour le mouvement de données de la mémoire de programme, 23 cycles non séquentiels (initiaux) suite à des cheminements, et 34 cycles séquentiels (rapides) pour d'autres instructions.

En considérant en outre que la fréquence du processeur est suffisante pour ne pas ralentir les temps d'accès à la mémoire, et que les temps d'accès sont respectivement de 65 nsec pour les accès initiaux non séquentiels et de 12 nsec pour les accès séquentiels rapides, la durée totale de l'exécution des 100 instructions est de 7697 nsec.

Ce calcul correspond à l'utilisation d'une mémoire de type rafale.

A titre de comparaison, en remplaçant la mémoire rafale par une mémoire classique, c'est-à-dire une mémoire pour laquelle tous les accès seraient lents (65 nsec), les mêmes opérations nécessiteraient une durée totale de 9295 nsec.

Finalement l'augmentation des performances d'un système de traitement de données avec une architecture de « Von Neumann » n'est que de 17% en remplaçant les mémoires traditionnelles par des mémoires de type rafale. Un constat sensiblement identique peut être fait en remplaçant les mémoires traditionnelles par les mémoires de type page.

Pour compléter l'exposé de l'état de la technique antérieure on peut se reporter aux documents (1), (2) et (3) dont les références sont précisées à la fin de la description. Ces documents concernent l'architecture de Von Neumann, et les mémoires de type rafale et page.

### Exposé de l'invention.

L'invention a pour but de proposer un système de traitement de données présentant des performances améliorées et permettant d'éviter dans une large mesure les limitations des dispositifs exposés ci-dessus.

Un but de l'invention est aussi de proposer un système de traitement de données puissant présentant une faible consommation en énergie de sorte qu'il puisse être intégré dans des applications embarquées et notamment des équipements portables.

Un but de l'invention est encore d'optimiser l'utilisation des caractéristiques des mémoires à accès rapide, telles que les mémoires de type page ou rafale, en évitant de multiplier les accès initiaux au profit des accès rapides.

L'invention a aussi pour but de proposer un procédé de distribution d'accès à des mémoires de données ou des mémoires de programme, permettant de mieux exploiter les systèmes de traitement de données avec une architecture de Von Neumann.

Pour atteindre ces buts, l'invention a plus précisément pour objet un système de traitement de données comprenant un processeur, au moins une mémoire de données, au moins une mémoire de programme, et un bus principal, commun aux mémoires de données et de programme et reliant ces mémoires au processeur.

Conformément à l'invention, au moins l'une des mémoires présente un mode d'accès rapide. De plus, le dispositif comprend une interface de distribution connectée entre le bus principal et les mémoires, pour mettre alternativement en communication, par l'intermédiaire du bus principal, l'une parmi la mémoire de données et la mémoire de programme avec le processeur, dans un mode d'accès dit actif, et pour maintenir l'autre mémoire dans un mode d'accès, dit passif et autorisant un accès subséquent rapide.

On considère que le système de traitement présente au moins une mémoire de données et au moins une mémoire de programme, lorsqu'il est pourvu d'une ou de plusieurs mémoires ou espaces d'une mémoire, affectés au stockage des données de traitement, et d'une ou de plusieurs mémoires ou espaces d'une mémoire, affectés au stockage de codes ou instructions pour l'exécution d'un programme. Toutefois, dans la suite de l'exposé, on considère pour des raisons de simplification, qu'une seule mémoire de données et une seule mémoire de programme sont reliées à un processeur par l'intermédiaire d'un bus commun principal.

Il convient en outre de préciser que le bus principal commun n'est pas nécessairement un bus unique. Le bus peut effectivement être formé d'un faisceau de plusieurs bus affectés à la transmission de signaux différents tels que des signaux de données (ou instructions), des signaux d'adresse et des signaux de commande.

En revanche, comme l'architecture générale est du type de "Von Neumann", le bus commun, simple ou multiple, ne permet pas de transmettre de façon concomitante des données de traitement (data) et des données correspondant à des instructions de programme (code).

Enfin, on considère qu'une mémoire est à accès rapide si elle permet d'échanger, suite à un accès initial relativement lent, des données (ou des instructions) avec des temps d'accès réduits par rapport à celui de l'accès initial. Les mémoires à accès rapide sont, par exemple, des mémoires telles que les mémoires "rafale" (burst) ou "page" déjà évoquées dans la partie introductive du texte. Dans le système de traitement au moins l'une des mémoires, par exemple la mémoire de programme, est à accès rapide. Toutefois, il est préférable que toutes les mémoires le soient.

Grâce à l'interface de distribution, la mémoire à accès rapide qui n'est pas en communication avec le processeur ne retourne pas dans un état inactif qui nécessiterait un accès initial lent lors d'un prochain mouvement de données (ou instructions) mais est maintenue dans le mode d'accès passif qui permet de reprendre ultérieurement un mouvement de données (ou d'instructions) avec un accès rapide et non un accès initial lent.

On entend par mouvement de données la lecture ou l'écriture de données ou d'instructions dans la mémoire de données ou la mémoire de programme.

Le maintien de l'une des mémoires dans l'état qualifié d'accès passif consiste pour l'essentiel à « geler » les signaux qui lui sont appliqués ou tout au moins à appliquer à cette mémoire un état logique de commande qui interdit son passage à l'état inactif.

Ainsi, selon une réalisation particulière de l'interface de distribution, celle-ci peut comporter une mémoire pour conserver l'état logique d'un signal appliqué à une mémoire au moment de son passage d'un mode d'accès actif lorsqu'elle est en communication avec le processeur, au mode d'accès passif.

La mémoire qui est en communication avec le processeur, fonctionne selon le mode d'accès actif. Pour l'échange de données (ou d'instructions) entre cette mémoire et le processeur, l'interface de distribution peut comporter des moyens de copie pour transférer des signaux entre le bus principal et l'un parmi un premier bus secondaire reliant l'interface à la mémoire de données, et un deuxième bus secondaire reliant l'interface à la mémoire de programme.

Pour effectuer la sélection entre les modes d'accès actif ou passif des mémoires, il est possible de prendre en compte différents signaux en provenance du processeur. Par exemple, un signal d'adresse pour la lecture d'une donnée peut être pris en compte pour déterminer si l'adresse correspond à la mémoire de données ou à la mémoire de programme. La mémoire qui convient à l'adresse peut alors être mise en communication avec le bus dans le mode d'accès actif, tandis que l'autre mémoire est mise dans un état correspondant au mode d'accès passif.

Une autre possibilité, pour réaliser la distribution des mémoires, consiste à prendre en compte un signal véhiculé par un bus d'indication d'accès (de contrôle) du bus principal. Ce signal indique en particulier si un transfert de données concerne des données de traitement de la mémoire de données ou des instructions de la mémoire de programme. Dans ce cas, l'interface de distribution est sensible à un premier état logique d'un signal du bus d'indication d'accès, dans lequel la mémoire de programme est mise dans un mode d'accès actif et la mémoire de données dans un mode d'accès passif, et à un deuxième état logique du signal véhiculé par le bus d'indication d'accès dans lequel la mémoire de programme est dans un mode d'accès passif et la mémoire de données dans un état d'accès actif.

L'ensemble du système de traitement de données, c'est-à-dire le processeur, le bus et les mémoires de données et de programme, peut être intégré dans un même circuit intégré visant une application spécifique (ASIC). Un tel circuit peut trouver sa place dans un téléphone portable, par exemple.

Selon une autre possibilité, les mémoires et l'interface de distribution peuvent être intégrées dans un même circuit ou ménagées dans un même boîtier, tandis que le processeur est intégré dans un circuit distinct ou ménagé dans un boîtier distinct.

Cette seconde possibilité permet notamment de remplacer les mémoires traditionnelles équipant un système existant par un boîtier avec des mémoires rafale ou flash, équipées de l'interface de distribution, conformément à l'invention.

L'invention concerne également un procédé de distribution d'accès à une mémoire de données et une mémoire de programmes, dont l'une au moins présente un mode d'accès rapide. Selon ce procédé, et conformément à la description qui précède, on met sélectivement et alternativement en communication, par l'intermédiaire d'un bus commun, l'une des mémoires avec un processeur, dans un mode d'adressage dit actif tandis que l'on maintient la seconde mémoire dans un mode d'adressage d'attente invariable, dit passif. Comme évoqué ci-dessus, on peut, lors du mode d'adressage passif, appliquer à l'une des mémoires un signal invariable interdisant un accès initial distinct de l'accès rapide lorsque la mémoire passe ultérieurement en mode d'adressage actif.

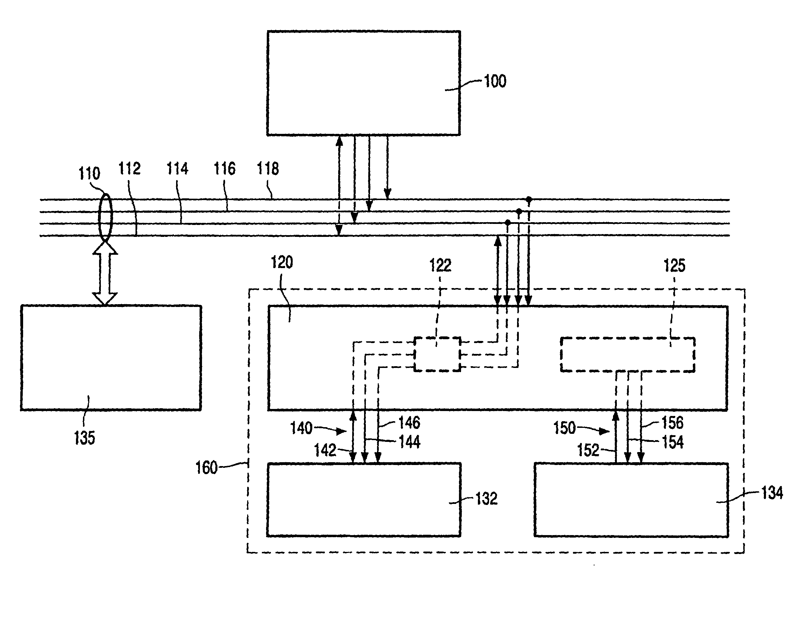

D'autres caractéristiques et avantages de l'invention ressortiront de la description qui va suivre en référence à la figure du dessin annexé. Cette description est donnée à titre purement illustratif et non limitatif.

### Description détaillée de modes de mise en oeuvre de l'invention.

La figure annexée montre un système de traitement de données conforme à l'invention.

Le système comprend un processeur 100, un bus principal 110, une interface de distribution 120, une mémoire de données 132 et une mémoire de programme 134. La mémoire de données 132 et la mémoire de programme 134 sont du type à accès rapide. Dans cet exemple, l'interface de distribution 120 est reliée à la mémoire de données 132 et à la mémoire de programme 134 par l'intermédiaire respectivement d'un premier et un deuxième bus secondaires 140 et 150.

Le processeur 100 est, par exemple, un processeur à jeu d'instructions réduit (RISC) du type R3000 (MIPS) ou ARM7, et échange avec le bus principal 110 différents signaux.

Parmi ces signaux, on distingue les signaux (CPU Data) de données (ou instructions), les signaux d'adresse (CPU Address) qui indiquent à quelle adresse une donnée (ou instruction) doit être lue ou écrite, les signaux de commande (CPU Control) qui déterminent si une donnée doit être lue ou écrite, et enfin des signaux de lecture d'instruction (Opcode fetch) qui précisent si une donnée (ou instruction) doit être lue dans la mémoire de données ou dans la mémoire de programme. Ce dernier signal peut aussi être déduit des signaux d'adresse.

Les signaux de données (ou d'instructions), peuvent être émis depuis ou vers le processeur. Les autres signaux tels que les signaux de commande sont émis par le processeur vers les mémoires.

Chaque type de signal mentionné ci-dessus, est transmis sur un bus séparé, indiqué respectivement par les références 112, 114, 116, 118, sur la figure. Tous ces bus font partie du bus principal 110 et peuvent être considérés comme différentes voies du bus principal.

L'interface de distribution 120 comprend des moyens de copie 122 représentés très schématiquement en trait discontinu. Ceux-ci copient les données du bus principal vers un premier bus secondaire 140, et réciproquement, de façon à mettre en communication l'une des mémoires avec le bus principal. Il s'agit sur la figure de la mémoire de données 132. Le premier bus secondaire 140 comprend un bus 142 de données, mis en communication avec le bus de données 112 du bus principal 110, un bus d'adresses 144, mis en communication avec le bus d'adresse 114 du bus principal 110, et un bus de commande (lecture/écriture) 146, mis en communication avec le bus de commande 116 du bus principal. Le dernier bus 118 du bus principal qui porte les signaux de lecture d'instruction n'est pas copié vers le bus secondaire et vers la mémoire 132. Les signaux de ce bus d'indication d'accès sont en effet utilisés dans l'interface de distribution 120 pour déterminer laquelle des mémoires est en mode d'accès actif, c'est-à-dire à laquelle s'appliquent les moyens de copie 122. A titre d'exemple, pour un état logique 1 du signal de ce bus, la mémoire de programme est dans le mode actif et la mémoire de données est dans le mode passif. Ces rôles sont inversés pour l'état logique 0.

Un deuxième bus secondaire 150 relie l'interface 120 à la mémoire de programme 134, qui, dans l'exemple illustré, est dans un mode d'accès dit passif.

Le deuxième bus est formé également de plusieurs bus référencés 152, 154 et 156. Les fonctions de ces bus sont identiques aux bus 142, 144 et 146 déjà évoqués. On peut noter cependant que le bus de données (instructions) 152, peut éventuellement servir seulement à la lecture d'instructions et non à leur écriture, selon le type de mémoire de programme utilisée.

Une mémoire 125 de l'interface 120, reliée à la mémoire de programme par l'intermédiaire du deuxième bus secondaire 150, retient le dernier état logique des signaux appliqués à la mémoire de programme avant que celle-ci ne passe d'un mode d'accès actif au mode passif. En d'autres termes, la mémoire 125 provoque un "gel" de ces signaux jusqu'à un prochain accès actif, lors duquel les moyens de copie mettront en communication les bus 112, 114 et 116 du bus principal 110 avec les bus 152, 154 et 156 du deuxième bus secondaire. Le gel des signaux peut aussi concerner un signal d'horloge appliqué aux mémoires lorsque celles-ci présentent un mode d'accès séquentiel (mémoires rafale). Le "gel" des signaux a pour effet d'éviter un accès initial lent lors d'une prochaine lecture ou écriture de données (instructions) dans une mémoire.

Un trait discontinu 160 indique sommairement un boîtier autonome susceptible de regrouper les mémoires 132, 134 et l'interface 120.

Par ailleurs, la référence 135 désigne des équipements périphériques ou des interfaces de connexion susceptibles d'être connectés au bus principal 110.

### Documents cités :

1) WO 95/12854
2) 3.0 Volt-only Page Mode Flash Memory Technology AMD (www.amd.com)
3) 3.0 Volt-only Burst Mode Flash Memory Technology AMD (www.amd.com)

## Revendications

1. Système de traitement de données comprenant un processeur (100), au moins une mémoire de données (132), au moins une mémoire de programme (134), et un bus principal (110), commun aux mémoires de données et de programme et reliant ces mémoires au processeur, **caractérisé en ce qu'**au moins l'une des mémoires présente un mode d'accès rapide et **en ce que** le dispositif comprend en outre une interface de distribution (120) entre le bus principal (110) et les mémoires pour mettre alternativement en communication, par l'intermédiaire du bus principal, l'une parmi la mémoire de données et la mémoire de programme avec le processeur, dans un mode d'accès dit actif, et pour maintenir l'autre mémoire dans un mode d'accès dit passif interdisant son passage à un état inactif et autorisant un accès subséquent rapide.

2. Système selon la revendication 1, dans lequel l'interface de distribution comprend des moyens de copie pour transférer des signaux entre le bus principal (110) et l'un parmi un premier bus secondaire (140) reliant l'interface à la mémoire de données et un deuxième bus secondaire (150) reliant l'interface à la mémoire de programme.

3. Système selon la revendication 1, dans lequel l'interface comprend une mémoire (125) pour conserver l'état logique d'un signal appliqué à une mémoire au moment de son passage d'un mode d'accès actif lorsqu'elle est en communication avec le processeur, au mode d'accès passif.

4. Système selon la revendication 1, dans lequel le bus principal comprend un bus de données (112), un bus d'adresses (114), un bus de commande (116) et un bus d'indication d'accès (118).

5. Système selon la revendication 4, dans lequel l'interface de distribution (120) est sensible à un premier état logique d'un signal véhiculé par le bus d'indication d'accès (118), dans lequel la mémoire de programme est mise dans un mode d'accès actif et la mémoire de données dans un mode d'accès passif, et à un deuxième état logique du signal véhiculé par le bus d'indication d'accès dans lequel la mémoire de programme est mise dans un mode d'accès passif et la mémoire de données dans un étal d'accès actif.

6. Système selon la revendication 1, dans lequel au moins l'une parmi les mémoires de données et de programme comprend une mémoire de type mémoire-rafale ou de type mémoire-page.

7. Système selon la revendication 1, dans lequel le processeur, les mémoires (132, 134) et l'interface de distribution (120) font partie d'un même circuit intégré.

8. Système selon la revendication 1, dans lequel les mémoires et l'interface de distribution font partie d'un circuit intégré, distinct d'un circuit intégré comprenant le processeur.

9. Système selon la revendication 1, dans lequel l'interface de distribution et le processeur font partie d'un circuit intégré, distinct des composants mémoires.

10. Système selon la revendication 1, **caractérisé en ce qu'**il comprend un boîtier (160) regroupant la mémoire de données (132), la mémoire de programme (134) et l'interface de distribution (120).

11. Téléphone portable comprenant un système de traitement de données conforme à la revendication 1.

12. Procédé de distribution d'accès à une mémoire de données (132) et une mémoire de programmes (134), dont l'une au moins présente un mode d'accès rapide, **caractérisé en ce qu'**on met sélectivement et alternativement en communication, par l'intermédiaire d'un bus commun, l'une des mémoires avec un processeur (100), dans un mode d'adressage dit actif tandis que l'on maintient la seconde mémoire dans un mode d'adressage d'attente invariable, dit passif, interdisant son passage à un état inactif et autorisant un accès subséquent rapide.

13. Procédé selon la revendication 11, dans lequel lors du mode d'adressage passif, on applique à l'une des mémoires un signal invariable interdisant un accès initial distinct de l'accès rapide lorsque la mémoire passe en mode d'adressage actif.

## Claims

1. Data processing system comprising a processor (100), at least one data memory (132), at least one program memory (134), and a main bus (110), common to the data and program memories and linking these memories to the processor, **characterized in that** at least one of the memories has a fast access mode and **in that** the device also comprises a distribution interface (120) between the main bus (110) and the memories to alternately place in communication, via the main bus, either the data memory or the program memory with the processor, in a so-called active access mode, and to keep the other memory in a so-called passive access mode preventing its transition to an inactive state and allowing subsequent fast access.

2. System according to Claim 1, in which the distribution interface comprises copying means for transferring signals between the main bus (110) and either a first secondary bus (140) linking the interface to the data memory or a second secondary bus (150) linking the interface to the program memory.

3. System according to Claim 1, in which the interface comprises a memory (125) for retaining the logical state of a signal applied to a memory at the time of its transition from an active access mode when it is in communication with the processor, to the passive access mode.

4. System according to Claim 1, in which the main bus comprises a data bus (112), an address bus (114), a command bus (116) and an access indication bus (118).

5. System according to Claim 4, in which the distribution interface (120) is sensitive to a first logic state of a signal conveyed by the access indication bus (118), in which the program memory is placed in an active access mode and the data memory in a passive access mode, and to a second logic state of the signal conveyed by the access indication bus in which the program memory is placed in a passive access mode and the data memory in an active access state.

6. System according to Claim 1, in which at least one out of the data and program memories comprises a memory of burst memory type or of page memory type.

7. System according to Claim 1, in which the processor, the memories (132, 134) and the distribution interface (120) form part of one and the same integrated circuit.

8. System according to Claim 1, in which the memories and the distribution interface form part of an integrated circuit, distinct from an integrated circuit including the processor.

9. System according to Claim 1, in which the distribution interface and the processor form part of an integrated circuit, distinct from the memory components.

10. System according to Claim 1, **characterized in that** it comprises a casing (160) containing the data memory (132), the program memory (134) and the distribution interface (120).

11. Portable telephone comprising a data processing system according to Claim 1.

12. Method for distributing access to a data memory (132) and a program memory (134), of which at least one has a fast access mode, **characterized in that** one of the memories is selectively and alternately placed in communication, via a common bus, with a processor (100), in a so-called active addressing mode whereas the second memory is maintained in a so-called passive, invariable awaiting addressing mode, preventing its transition to an inactive state and allowing subsequent fast access.

13. Method according to Claim 11, in which, in the passive addressing mode, an invariable signal is applied to one of the memories preventing an initial access distinct from the fast access when the memory switches to active addressing mode.

## Patentansprüche

1. Datenverarbeitungssystem, das einen Prozessor (100), mindestens einen Datenspeicher (132), mindestens einen Programmspeicher (134) und einen Hauptbus (110) enthält, der dem Datenspeicher und dem Programmspeicher gemeinsam ist und diese Speicher mit dem Prozessor verbindet, **dadurch gekennzeichnet, dass** mindestens einer der Speicher einen schnellen Zugriffsmodus aufweist, und dass die Einrichtung außerdem mindestens eine Verteilungsschnittstelle (120) zwischen dem Hauptbus (110) und den Speichern enthält, um über den Hauptbus alternativ entweder den Datenspeicher oder den Programmspeicher mit dem Prozessor in einem so genannten aktiven Zugriffsmodus zu verbinden, und um den anderen Speicher in einem so genannten passiven Zugriffsmodus zu halten, der seinen Übergang in einen inaktiven Zustand verhindert und einen nachfolgenden schnellen Zugriff erlaubt.

2. System nach Anspruch 1, bei dem die Verteilungsschnittstelle Kopiereinrichtungen enthält, um Signale zwischen dem Hauptbus (110) und einem von einem ersten sekundären Bus (140), der die Schnittstelle mit dem Datenspeicher verbindet, und einem zweiten sekundären Bus (150) zu übertragen, der die Schnittstelle mit dem Programmspeicher verbindet.

3. System nach Anspruch 1, bei dem die Schnittstelle einen Speicher (125) enthält, um den logischen Zustand eines Signals aufrechtzuerhalten, das an einen Speicher im Moment seines Übergangs von einem aktiven Zugriffsmodus, wenn er mit dem Prozessor in Verbindung steht, in den passiven Zugriffsmodus angelegt wird.

4. System nach Anspruch 1, bei dem der Hauptbus einen Datenbus (112), einen Adressenbus (114), einen Steuerbus (116) und einen Zugriffsanzeigebus (118) enthält.

5. System nach Anspruch 4, bei dem die Verteilungsschnittstelle (120) auf einen ersten logischen Zustand eines vom Zugriffsanzeigebus (118) übertragenen Signals anspricht, in dem der Programmspeicher in einen aktiven Zugriffsmodus und der Datenspeicher in einen passiven Zugriffsmodus versetzt wird, und auf einen zweiten logischen Zustand des vom Zugriffsanzeigebus übertragenen Signals anspricht, in dem der Programmspeicher in einen passiven Zugriffsmodus und der Datenspeicher in einen aktiven Zugriffsmodus versetzt wird.

6. System nach Anspruch 1, bei dem mindestens einer der Daten- und Programmspeicher einen Speicher vom Typ Burstspeicher oder Seitenspeicher enthält.

7. System nach Anspruch 1, bei dem der Prozessor, die Speicher (132, 134) und die Verteilungsschnittstelle (120) Teil der gleichen integrierten Schaltung sind.

8. System nach Anspruch 1, bei dem die Speicher und die Verteilungsschnittstelle Teil einer integrierten Schaltung sind, die sich von einer integrierten Schaltung unterscheidet, die den Prozessor enthält.

9. System nach Anspruch 1, bei dem die Verteilungsschnittstelle und der Prozessor Teil einer integrierten Schaltung sind, die sich von den Speicherbauteilen unterscheidet.

10. System nach Anspruch 1, **dadurch gekennzeichnet, dass** es ein Gehäuse (160) enthält, das den Datenspeicher (132), den Programmspeicher (134) und die Verteilungsschnittstelle (120) umfasst.

11. Mobiltelefon, das ein Datenverarbeitungssystem nach Anspruch 1 enthält.

12. Verfahren zur Zugriffsverteilung an einen Datenspeicher (132) und einen Programmspeicher (134), von denen mindestens einer einen schnellen Zugriffsmodus aufweist, **dadurch gekennzeichnet, dass** einer der Speicher selektiv und alternativ über einen gemeinsamen Bus mit einem Prozessor (100) in einem so genannten aktiven Adressierungsmodus in Verbindung gesetzt wird, während der zweite Speicher in einem so genannten passiven Adressierungsmodus unveränderlichen Wartens gehalten wird, der seinen Übergang in einen inaktiven Zustand verhindert und einen nachfolgenden schnellen Zugriff erlaubt.

13. Verfahren nach Anspruch 11, bei dem im passiven Adressierungsmodus an einen der Speicher ein unveränderliches Signal angelegt wird, das einen Anfangszugriff verhindert, der sich vom schnellen Zugriff unterscheidet, wenn der Speicher in den aktiven Adressierungsmodus übergeht.
